# EUROPÄISCHE PATENTSCHRIFT

(11) **EP 4 165 480 B1**
(45) Veröffentlichungstag und Bekanntmachung des Hinweises auf die Patenterteilung: **26.08.2026**
(21) Anmeldenummer: 21727469.5
(22) Anmeldetag: 20.05.2021
(51) Int. Cl.: G05B 19/418

(54) **SYSTEM, VERFAHREN UND COMPUTERPROGRAMM ZUR STEUERUNG EINER AUS MEHREREN ANLAGENTEILEN BESTEHENDEN PRODUKTIONSANLAGE, INSBESONDERE EINER METALLURGISCHEN PRODUKTIONSANLAGE ZUR ERZEUGUNG VON INDUSTRIEGÜTERN WIE METALLISCHEM HALBZEUG UND/ODER METALLISCHEN ENDPRODUKTEN**
SYSTEM, METHOD AND COMPUTER PROGRAM FOR CONTROLLING A PRODUCTION PLANT CONSISTING OF A PLURALITY OF PLANT PARTS, IN PARTICULAR A METALLURGICAL PRODUCTION PLANT FOR PRODUCING INDUSTRIAL GOODS SUCH AS METAL SEMI-FINISHED PRODUCTS AND/OR METAL END PRODUCTS
SYSTÈME, PROCÉDÉ ET PROGRAMME INFORMATIQUE DE COMMANDE D'UNE USINE DE PRODUCTION CONSTITUÉE D'UNE PLURALITÉ DE PARTIES D'USINE, EN PARTICULIER D'UNE USINE DE PRODUCTION MÉTALLURGIQUE POUR LA PRODUCTION DE MARCHANDISES INDUSTRIELLES TELLES QUE DES PRODUITS SEMI-FINIS MÉTALLIQUES ET/OU DES PRODUITS FINAUX MÉTALLIQUES

(30) Priorität: 10.06.2020 DE 102020207247
(43) Veröffentlichungstag der Anmeldung: 19.04.2023
(73) Patentinhaber: SMS group GmbH, 41069 Mönchengladbach (DE)
(72) Erfinder: DAUBE, Thomas, 47279 Duisburg (DE); BEHRENS, Holger, 40699 Erkrath (DE); KÜMMEL, Lutz, 41363 Jüchen (DE); SOMMERS, Ulrich, 40627 Düsseldorf (DE)
(74) Vertreter: Kross, Ulrich
(86) Internationale Anmeldenummer: PCT/EP2021/063555
(87) Internationale Veröffentlichungsnummer: WO 2021/249740

(56) Entgegenhaltungen:
- EP-A1- 3 106 948
- EP-A1- 3 358 431
- DE-A1- 102018 216 495

## Beschreibung

Die Erfindung betrifft ein System zur Steuerung einer aus mehreren Anlagenteilen bestehenden Produktionsanlage, insbesondere einer metallurgischen Produktionsanlage zur Erzeugung von Industriegütern wie metallischem Halbzeug und/oder metallischen Endprodukten. Die Erfindung betrifft ferner ein Verfahren zur Steuerung einer aus mehreren Anlagenteilen bestehenden Produktionsanlage, insbesondere einer metallurgischen Produktionsanlage zur Erzeugung von Industriegütern wie metallischem Halbzeug und/oder metallischen Endprodukten und ein Computerprogramm zur Ausführung des erfindungsgemäßen Verfahrens, insbesondere mittels einem erfindungsgemäßen System.

Bei der Herstellung von metallischem Halbzeug und/oder metallischen Endprodukten wird eine mehrstufige Prozesskette einer metallurgischen Produktionsanlage durchlaufen. Beispielsweise durchlaufen Bauteile für Automobile nach der Herstellung des Roheisens oder dem Einsatz von Schrott in einem Stahlwerk folgende typische Prozesskette: Stranggießen von Brammen, Warmwalzen auf 1 bis 6 mm, Beizen des Bandes zum Entfernen von Zunderresten, Kaltwalzen auf 0,3 bis 3 mm, Wärmebehandlung im Glühofen zum Einstellen des charakteristischen Gefüges, Aufheizen des Bandes auf eine Beschichtungstemperatur von 340 bis 480 °C, Schmelztauchbeschichten, Zuschneiden, Umformen, Fügen und Farbbeschichten. Dabei werden unter anderem die folgenden Anlagenteile der metallurgischen Produktionsanlage eingesetzt: Strangguss, Warmbandstraße, Beize/Tandemstraße, Bandverzinkungsanlage, Stanz-/Pressstraße, Schweißautomat und Tauchlackierung.

Bei der Herstellung von Langprodukten durch eine metallurgische Produktionsanlage wird beispielsweise die folgenden Prozesskette durchlaufen: Stranggießen von Knüppeln, Warmwalzen auf 4 bis 200 mm Rundmaterial in mehreren Walzgerüsten, Entfernen der verzunderten Oberfläche und Schmieden. Diese Prozesskette wird beispielsweise durch folgende Anlagenteile der metallurgischen Produktionsanlage abgebildet: Strangguss von Knüppeln, Draht-/Knüppelstraße, Schällinie und Schmiedepresse.

Von einem abstrakten Standpunkt aus gesehen, durchläuft jedes Produkt mehrere Umwandlungsstufen (Anlagenteile) bis das Endprodukt erreicht wird. Dabei weist jede Umwandlungsstufe ein Eingangsqualitätsfenster, ein Ausgangsqualitätsfenster und ein Prozessfenster auf. Das Eingangsqualitätsfenster definiert die erforderlichen Qualitätseigenschaften des Eingangsprodukts. Durch das Ausgangsqualitätsfenster werden nach jeder Umwandlungsstufe (Anlagenteil) Kriterien definiert, um die Qualität des Zwischenprodukts zu prüfen. Bei einer aus mehreren Anlagenteilen bestehenden Produktionsanlage ist das Ausgangsqualitätsfenster einer vorgelagerten Umwandlungsstufe (Anlagenteil) dem Eingangsqualitätsfenster der nachfolgenden Umwandlungsstufe (Anlagenteil) gleichzusetzen. Jede Umwandlungsstufe (Anlagenteil) besitzt ferner ein Prozessfenster, welches die von der jeweiligen Umwandlungsstufe (Anlagenteil) umsetzbaren Setzwerte für die Anlagenautomation der Umwandlungsstufe (Anlagenteil) definiert. Die Setzwerte werden dabei so eingestellt, dass die in dem Ausgangsqualitätsfenster der Umwandlungsstufe (Anlagenteil) definierte Qualität durch die Umwandlungsstufe (Anlagenteil) erzielt wird.

Durch eine Umwandlungsstufe bzw. einen Anlagenteil ändert ein Produkt seinen Zustand von A nach B. So wird beispielsweise in einer Beize die verzunderte Oberfläche nach dem Warmwalzen entfernt, in einem Glühofen werden durch gezieltes Aufheizen und Abkühlen die Materialeigenschaften eingestellte oder in einem Drahtwalzwerk wird aus einem Knüppeln (z.B. 150x150 mm²) ein Draht von z.B. 5,5 mm rund hergestellt. Dies sind nur einige Beispiele für Umwandlungsstufen bzw. Anlagenteile einer metallurgischen Produktionsanlage.

Nach jeder Umwandlungsstufe (Anlagenteil) werden Kriterien definiert, die das Produkt nach dem Umwandlung besitzen soll. Diese Kriterien haben untere und obere Grenzen, innerhalb deren die Eigenschaften des Produkts liegen müssen. Alle Kriterien, die nach einer Umwandlungsstufe (Anlagenteil) erfüllt werden müssen, bilden das Qualitätsfenster. Bei einer aus mehreren Umwandlungsstufen (Anlagenteilen) bestehenden Produktionsanlage entspricht das Ausgangsqualitätsfenster einer vorgelagerten Umwandlungsstufe (Anlagenteil) dem Eingangsqualitätsfenster der nachfolgenden Umwandlungsstufe (Anlagenteil). Insbesondere legen die Anforderungen (Eingangsqualitätsfenster) einer nachfolgenden Umwandlungsstufe (Anlagenteil) die Qualitätsanforderungen (Ausgangsqualitätsfenster) für die vorgelagerte Umwandlungsstufe (Anlagenteil) fest. Beispiele für Qualitätsfenster sind, dass kein Restzunder nach dem Beizen auf dem Produkt vorhanden ist, dass die Streckgrenze und Zugfestigkeit innerhalb vorgegebener Grenzen liegen, oder dass ein Rundmaterial vorgegebene Ovalitäten (Unterschied zwischen minimalen und maximalen Durchmesser) nicht überschreitet. Dies sind nur einige Beispiele für Qualitätsfenster von Umwandlungsstufen bzw. Anlagenteilen einer metallurgischen Produktionsanlage.

Um das Ausgangsqualitätsfenster nach einer Umwandlungsstufe (Anlagenteil) zu erreichen, können die Setzwerte für die Anlagenautomation der Umwandlungsstufe (Anlagenteil) innerhalb des Prozessfensters der Umwandlungsstufe (Anlagenteil) angepasst werden. Beispiele für Prozessfenster von Umwandlungsstufen (Anlagenteilen) sind die Temperatur der Säure einer Beize zur Reinigung von verzunderten Oberflächen, die Haltezeit im Glühofen zur Anpassung der Streckgrenze oder die Züge zwischen Walzgerüsten zur Beeinflussung von Ovalitäten. Dies sind nur einige Beispiele für Prozessfenster von Umwandlungsstufen bzw. Anlagenteilen einer metallurgischen Produktionsanlage.

In den einzelnen Umwandlungsstufen (Anlagenteilen) wird die Reihenfolge von herzustellenden Produkten von einem Produktionsplanungssystem übernommen. So werden beispielsweise in einer Beizanlage Produkte mit ähnlicher Verzunderung nacheinander durch die Beize gefahren, um notwendige Temperaturänderungen der Säure in den Beiztanks zu minimieren. Entsprechend können in einem Glühofen Produkte mit ähnlichen Glühtemperaturen hintereinander produziert werden oder in einem Drahtwalzwerk wird die Reihenfolge der Produkte so festgelegt, dass die Rüstzeit für den Walzenwechsel minimal ist. Dies sind nur einige Beispiele für eine Produktionsplanung in Umwandlungsstufen (Anlagenteilen) von metallurgischen Anlagen.

Die Produktionsplanung erfolgt dabei nur für eine Umwandlungsstufe (Anlagenteil), wobei für diese Umwandlungsstufe (Anlagenteil) die Produktionsreihenfolge optimiert wird. Auch wird bei der Planung der Produktionsreihenfolge üblicherweise von einem idealen Zustand der Umwandlungsstufe (Anlagenteil) ausgegangen und/oder einem idealen Eingangsprodukt.

Die EP 3 358 431 A1 offenbart, dass ein Produktionsplanungssystem für eine Anlage der Grundstoffindustrie deren Produktionsplanungsdaten ermittelt und sie dem Automatisierungssystem der Anlage vorgibt. Ein Zustandsüberwachungssystem ermittelt bisherige und zukünftig erwartete Zustände von Komponenten der Anlage. Ein Qualitätsermittlungssystem ermittelt Zustände von von der Anlage erzeugten und noch zu erzeugenden Ausgangsprodukten und/oder vergangene und zukünftige Zustände der Anlage als Ganzes. Ein Wartungsplanungssystem und/oder das Produktionsplanungssystem nehmen vom Zustandsüberwachungssystem die von diesem ermittelten Zustände der Komponenten der Anlage und vom Qualitätsermittlungssystem die von diesem ermittelten Zustände der Ausgangsprodukte und/oder der Anlage als Ganzes entgegen. Sie berücksichtigen bei der Ermittlung von Wartungsplanungsdaten und/oder der Produktionsplanungsdaten die vom Zustandsüberwachungssystem und vom Qualitätsermittlungssystem entgegengenommenen Daten.

Der Erfindung liegt die Aufgabe zugrunde den Herstellungsprozess in einer aus mehreren Anlagenteilen bestehenden Produktionsanlage zu optimieren, insbesondere einer metallurgischen Produktionsanlage zur Erzeugung von Industriegütern wie metallischem Halbzeug und/oder metallischen Endprodukten.

Die Aufgabe wird erfindungsgemäß gelöst durch ein System gemäß Anspruch 1 und einem Verfahren gemäß Anspruch 9. Vorteilhafte Ausgestaltungen der Erfindung sind in den abhängigen Ansprüchen definiert.

Die Erfindung betrifft ein System zur Steuerung einer aus mehreren Anlagenteilen bestehenden Produktionsanlage, insbesondere einer metallurgischen Produktionsanlage zur Erzeugung von Industriegütern wie metallischem Halbzeug und/oder metallischen Endprodukten,
wobei jeder Anlagenteil ein Eingangsqualitätsfenster, ein Ausgangsqualitätsfenster und ein Prozessfenster aufweist,
wobei das Eingangsqualitätsfenster eines Anlagenteils die von dem Anlagenteil erforderlichen Qualitätseigenschaften des Eingangsprodukts definiert und das Ausgangsqualitätsfenster eines Anlagenteils die von dem Anlagenteil nach der Bearbeitung des Eingangsprodukts erlaubten Qualitätseigenschaften des Ausgangsprodukts definiert,
wobei bei einer aus mehreren Anlagenteilen bestehenden Produktionsanlage das Ausgangsqualitätsfenster eines vorgelagerten Anlagenteils dem Eingangsqualitätsfenster des nachfolgenden Anlagenteils entspricht,
wobei das Prozessfenster die von dem jeweiligen Anlagenteil umsetzbaren Setzwerte für eine Anlagenautomation des Anlagenteils definiert,
wobei jeder Anlagenteil den aktuellen Zustand mittels Sensoren erfasst und das Prozessfenster des Anlagenteils an den erfassten aktuellen Zustand anpasst, und
wobei das System zur Steuerung der aus den mehreren Anlagenteilen bestehenden Produktionsanlage für jeden Anlagenteil Setzwerte für die jeweilige Anlagenautomation bestimmt, die innerhalb der jeweiligen Prozessfenster liegen und dass das in der Produktionsanlage hergestellte Produkt die von den Eingangsqualitätsfenstern und Ausgangsqualitätsfenstern der mehreren Anlagenteile erforderlichen Qualitätseigenschaften erfüllt.

Ein Anlagenteil im Sinne der Erfindung kann allgemein auch als Umwandlungsstufe bezeichnet werden.

Erfindungsgemäß werden die Zustände der Anlagenteile der Produktionsanlage mittels Sensoren überwacht. Auf Basis dieser Überwachung können die Prozessfenster der jeweiligen Anlagenteile an den aktuellen Zustand des Anlagenteils angepasst werden. Beispielsweise wird dabei berücksichtigt, dass sich das Prozessfenster über die Zeit wegen eines auftretenden Verschleißes reduziert. Auch können Störungen oder äußere Einflüsse erfasst werden und das Prozessfenster des betroffenen Anlagenteils kann entsprechend angepasst werden.

Das erfindungsgemäße System bestimmt Setzwerte für die Anlagenautomationen der Anlagenteile der Produktionsanlage, wobei die Setzwerte innerhalb der aktuellen Prozessfenster der Anlagenteile liegen. Es wird also der aktuellen Anlagenzustand bei der Bestimmung der Setzwerte berücksichtigt. Die Setzwerte sind so gewählt, dass das in der Produktionsanlage hergestellte Produkt die von den Eingangsqualitätsfenstern und Ausgangsqualitätsfenstern der mehreren Anlagenteile erforderlichen Qualitätseigenschaften erfüllt. Es wird also sichergestellt, dass das hergestellte Produkt über die gesamte Produktion die erforderlichen Qualitätsanforderungen erfüllt. Dadurch wird gleichzeitig gewährleistet, dass das finale Produkt die Qualitätsanforderungen erfüllt.

Nach einer vorteilhaften Variante der Erfindung aktualisiert das System nach erfolgter Bearbeitung des herzustellenden Produkts durch einen Anlagenteil die Setzwerte für die Anlagenautomationen der nachfolgenden Anlagenteile auf Basis der erzielten Ausgangsqualität des abgearbeiteten Anlagenteils und der aktuellen Prozessfenster der nachfolgenden Anlagenteile. Es wird somit nach erfolgter Bearbeitung des herzustellenden Produkts durch ein Anlagenteil die nachfolgende Bearbeitung durch die nachfolgenden Anlagenteile aktualisiert. Die bereits erfolgte Bearbeitung durch die vorherigen Anlagenteile ist dabei unveränderlich und die Bearbeitung durch die nachfolgenden Anlagenteile wird auf Basis der aktuellen Prozessfenster der nachfolgenden Anlagenteile bestimmt.

Gemäß einer erfindungsgemäßen Variante bestimmt das System eine Reihenfolge von in der Produktionsanlage herzustellenden Produkten, insbesondere unter Berücksichtigung der aktuellen Prozessfenster und der erzielbaren Qualitätseigenschaften der Ausgangsprodukte der Anlagenteile. Die Herstellung von Produkten in der Produktionsanlage wird auf Basis des aktuellen Zustands der Anlagenteile und der aktuellen Prozessfenster für mehrere herzustellende Produkte optimiert. Dabei werden beispielsweise Produkte mit vergleichbaren bzw. ähnlichen Qualitätsanforderungen nacheinander hergestellt, so dass die Setzwerte für die Anlagenautomationen der Anlagenteile möglichst minimal voneinander abweichen. Insbesondere berücksichtigt das System bei der Bestimmung der Reihenfolge von in der Produktionsanlage herzustellenden Produkte die Unterschiede und/oder Gemeinsamkeiten der herzustellenden Produkte.

In einer Variante der Erfindung berücksichtigt das System bei der Bestimmung der Setzwerte für die Anlagenautomationen der jeweiligen Anlagenteile die möglichen durch die jeweiligen Anlagenautomationen umsetzbaren Setzwertänderungsraten. Die Anlagenautomationen der einzelnen Anlagenteile können die Setzwerte zwar innerhalb des aktuellen Prozessfensters umsetzen, jedoch ist dies häufig nur innerhalb bestimmter Zeiträume möglich. Es sind also keine Setzwertsprünge umsetzbar, sondern nur Änderungen innerhalb vorgegebener Setzwertänderungsrate. Diese Setzwertänderungsraten werden vom erfindungsgemäßen System bei der Bestimmung der Setzwerte für die Anlagenautomationen der jeweiligen Anlagenteile berücksichtigt.

Nach einer bevorzugten erfindungsgemäßen Variante umfasst das System nach einem oder mehreren Anlagenteilen eine Qualitätskontrolle, zur Überprüfung der erzielten Produktqualitäten, insbesondere zur Anpassung der Setzwerte für die Anlagenautomationen der nachfolgenden Anlagenteile. Es wird also überprüft, ob an dem Standort der Qualitätskontrolle das bis dahin hergestellte Produkt die erwarteten Qualitätseigenschaften aufweist. Sollte die ermittelte Qualität von der erwarteten Qualität abweichen, können die Setzwerte für die Anlagenautomationen der nachfolgenden Anlagenteile angepasst werden, so dass das Produkt nachfolgend auch die Qualitätsanforderungen der Eingangsqualitätsfenster und Ausgangsqualitätsfenster der nachfolgenden Anlagenteile erfüllt.

Erfindungsgemäß bestimmen die Setzwerte der Anlagenautomation eines Anlagenteils die Ausgangsqualität des in dem Anlagenteil hergestellten Produkts, insbesondere ob und in welchem Bereich des Ausgangsqualitätsfensters die Qualität des in dem Anlagenteil hergestellten Produkts liegt. Über die Setzwerte wird also die Qualität des Ausgangsprodukts eines Anlagenteils bestimmt, wobei die Setzwerte innerhalb des aktuellen Prozessfensters des Anlagenteils liegen müssen.

In einer erfindungsgemäßen Variante erfassen die Sensoren der Anlagenteile den Verschleiß, den Wartungszustand oder dergleichen des Anlagenteils.

Nach einer besonders bevorzugten Variante der Erfindung erstellt das System ein Vorhersagemodell für die zukünftigen Zustände der Anlagenteile und berücksichtigt die von dem Vorhersagemodell vorhergesagten Zustände der Anlagenteile und die daraus resultierenden Prozessfenster der Anlagenteile bei der Bestimmung der Setzwerte für die Anlagenautomationen der Anlagenteile. Mittels des Vorhersagemodells wird insbesondere der zukünftige Zustand von Anlagenteilen zum Zeitpunkt der Bearbeitung eines bestimmten Produkts vorhergesagt. Besteht die Produktionsanlage beispielsweise aus 5 unterschiedlichen Anlagenteilen, so wird für den ersten Anlagenteil der aktuell erfasste Anlagenzustand berücksichtigt und für die folgenden Anlagenteile wird mittels des Vorhersagemodells jeweils zukünftiger Zustand des entsprechenden Anlagenteils vorhergesagt. Auf Basis dieser Zustände werden die Prozessfenster der Anlagenteile angepasst und nachfolgend entsprechende Setzwerte innerhalb dieser Prozessfenster bestimmt. Durch das Vorhersagemodell verbessert sich die Genauigkeit der Steuerung der Produktionsanlage, insbesondere mit zunehmender Anzahl von Anlagenteilen. Besonders vorteilhaft ist das Vorhersagemodell bei der Bestimmung einer Produktionsreihenfolge für die Produktionsanlage, da mittels des Vorhersagemodells auch für zukünftig herzustellende Produkte die entsprechenden Zustände der Anlagenteile und die daraus resultierenden Prozessfenster bestimmt und bei der Planung der Produktionsreihenfolge berücksichtigt werden können.

Gemäß einer Variante der Erfindung basiert das Vorhersagemodell auf den mittels der Sensoren erfassten Zuständen der Anlagenteile, der erzielten Produktqualitäten der Anlagenteile, anderen der Produktionsanlage zugehörigen Messwerten oder dergleichen. Insbesondere kann dabei der zeitliche Verlauf der genannten Parameter überwacht werden und auf Basis der historischen Daten eine Vorhersage über zukünftige Zustände der Anlagenteile getroffen werden. Die Vorhersage kann auch durch Wartungsinformationen, Informationen zu in der Anlage herzustellenden Produkten oder anderen die Produktionsanlage betreffenden Parametern verfeinert werden.

In einer zweckmäßigen Variante der Erfindung basiert das Vorhersagemodell auf Methoden der statistischen Datenauswertung und/oder dem maschinellen Lernen, insbesondere der linearen oder quadratischen Programme, genetischer Optimierung, bestärkendes Lernen mit Q-Tabellen, neuronalen Netzen, Simulated Annealing, Metropolis, Schwarm-Algorithmen, Hill Climbing, Lagrange-Multiplikator-Methode oder dergleichen.

Nach einer vorteilhaften Variante der Erfindung wird das Vorhersagemodell kontinuierlich oder zyklisch trainiert, insbesondere auf Basis der mittels der Sensoren erfassten Zustände der Anlagenteile, der erzielten Produktqualitäten der Anlagenteile, anderen der Produktionsanlage zugehörigen Messwerte oder dergleichen. Das Vorhersagemodell wird somit immer weiter verbessert, so dass die Vorhersagegenauigkeit mit der Laufzeit der Produktionsanlage stetig zunimmt.

Gemäß einer bevorzugten erfindungsgemäßen Variante stoppt das System den Herstellungsprozess in der Produktionsanlage, wenn die geforderte Qualität des hergestellten Produkts nicht erzielt werden kann. Alternativ ändert das System den Herstellungsprozess auf ein anderes herzustellendes Produkt, dessen geforderte Qualität noch durch den aktuellen Herstellungsprozess erzielt werden kann. Wird also festgestellt, dass das gewünschte Produkt aufgrund des aktuellen Anlagenzustands nicht herstellbar ist, wird entweder die Herstellung gestoppt oder auf ein anderes noch herstellbares Produkt geändert. Die kann auch während der Herstellungsprozesses, beispielsweise nach der Bearbeitung durch einen oder mehrere Anlagenteile erfolgen. Stellt sich beispielsweise nach der Bearbeitung durch einen dritten Anlagenteil aufgrund des aktuellen Zustands der folgenden Anlagenteile heraus, dass das gewünscht Produkt nicht mehr hergestellt werden kann, wird der Herstellungsprozess bereits nach dem dritten Anlagenteil gestoppt. Wenn möglich, wird ggf. die Herstellung auf ein anderes noch herstellbares Produkt geändert.

In einer zweckmäßigen Variante ist die Änderung auf ein anderes herzustellendes Produkt auf die innerhalb eines bestimmten Zeitraums vorgeplante Herstellung von herzustellenden Produkten beschränkt. Die aktuelle Produktion kann also nur auf ein Produkt geändert werden, welches innerhalb der näheren Zukunft herzustellen ist.

Nach einer vorteilhaften Variante der Erfindung berücksichtigt das System mehrere gleichartige Anlagenteile, so dass die Bearbeitung eines Herstellungsschritts alternativ auf unterschiedlichen Anlagenteilen erfolgen kann. Sollte also ein Anlagenteil die geforderte Produktqualität voraussichtlich nicht erzielen können, kann der Herstellungsschritt auf einem anderen gleichartigen Anlagenteil ausgeführt werden, welcher die geforderte Produktqualität voraussichtlich bereitstellen kann. Dies ergibt sich beispielsweise aus unterschiedlichen aktuellen Prozessfenstern der gleichartigen Anlagenteile.

Gemäß einer zweckmäßigen Variante umfasst das System einen zentralen Datenspeicher oder stellt einen Cloudspeicher bereit, zur Speicherung und Bereitstellung von systemrelevanten Daten, insbesondere der mittels Sensoren erfassten Zustände der Anlagenteile, der erzielten Produktqualitäten der jeweiligen Anlagenteile, der Setzwerte für die Anlagenautomationen der jeweiligen Anlagenteile und dergleichen.

In einer vorteilhaften Variante der Erfindung umfassen die Anlagenteile wenigstens teilweise optische Sensoren, zur Erfassung von geometrischen Informationen der in dem jeweiligen Anlagenteil hergestellten Produkte. Insbesondere bei metallurgischen Produktionsanlagen sind die geometrischen Informationen der in dem jeweiligen Anlagenteil hergestellten Produkte ein wesentlicher Faktor. So kann das erfindungsgemäße System beispielsweise aus den geometrischen Informationen die Produktqualität des in dem Anlagenteil hergestellten Produkts und/oder den Anlagenzustand des Anlagenteils ableiten, vorzugsweise mittels statistischer Methoden und/oder maschinellem Lernen. Ferner lassen sich die geometrischen Informationen mittels der optischen Sensoren auf einfache Art und Weise kontinuierlich erfassen und nachfolgend auswerten, was die Genauigkeit des Systems verbessert.

Nach einer zweckmäßigen Variante umfasst das erfindungsgemäße System eine Benutzerschnittstelle zur Anzeige von für den Herstellungsprozess relevanten Informationen, insbesondere auf einem tragbaren Gerät.

Erfindungsgemäß werden die Setzwerte für die Anlagenautomationen der mehreren Anlagenteile mittels eines Modells bestimmt. Das Modell berücksichtigt dabei insbesondere die Eingangsqualitätsfenster, die Ausgangsqualitätsfenster und die aktuellen Prozessfenster der mehreren Anlagenteile. Ferner können zusätzlich noch weitere Parameter berücksichtigt werden, wie beispielsweise erfasste Messwerte aus den Anlagenteilen und/oder aus anderen Datenquellen wie einem Produktionsplanungsplanungssystem, Wartungsplanungssystem oder anderen Komponenten der Produktionsanlage. Auf Basis der Eingangsdaten kann das Modell die optimalen Setzwerte für die jeweiligen Anlagenteile zur Herstellung eines Produkts bestimmen.

Nach einer Variante der Erfindung beruht das Modell auf physikalischen Gesetzen. In einer alternativen Variante basiert das Modell auf Methoden der statistischen Datenauswertung und/oder dem maschinellen Lernen, insbesondere der linearen oder quadratischen Programme, genetischer Optimierung, bestärkendes Lernen mit Q-Tabellen, neuronalen Netzen, Simulated Annealing, Metropolis, Schwarm-Algorithmen, Hill Climbing, Lagrange-Multiplikator-Methode oder dergleichen.

Gemäß einer vorteilhaften Variante wird das Modell kontinuierlich oder zyklisch trainiert, also ständig verbessert.

Die Erfindung betrifft ferner ein Verfahren zur Steuerung einer aus mehreren Anlagenteilen bestehenden Produktionsanlage, insbesondere einer metallurgischen Produktionsanlage zur Erzeugung von Industriegütern wie metallischem Halbzeug und/oder metallischen Endprodukten,
wobei jeder Anlagenteil ein Eingangsqualitätsfenster, ein Ausgangsqualitätsfenster und ein Prozessfenster aufweist,
wobei das Eingangsqualitätsfenster eines Anlagenteils die von dem Anlagenteil erforderlichen Qualitätseigenschaften des Eingangsprodukts definiert und das Ausgangsqualitätsfenster eines Anlagenteils die von dem Anlagenteil nach der Bearbeitung des Eingangsprodukts erlaubten Qualitätseigenschaften des Ausgangsprodukts definiert,
wobei bei einer aus mehreren Anlagenteilen bestehenden Produktionsanlage das Ausgangsqualitätsfenster eines vorgelagerten Anlagenteils dem Eingangsqualitätsfenster des nachfolgenden Anlagenteils entspricht,
wobei das Prozessfenster die von dem jeweiligen Anlagenteil umsetzbaren Setzwerte für eine Anlagenautomation des Anlagenteils definiert,
wobei das Verfahren die folgenden Schritte umfasst:
   Erfassen der aktuellen Zustände in den mehreren Anlagenteilen, insbesondere mittels Sensoren,
   Anpassen jeweiligen Prozessfenster der mehreren Anlagenteile anhand der erfassten aktuellen Zustände der mehreren Anlagenteile, und
   Bestimmen von jeweiligen Setzwerten für die Anlagenautomationen der mehreren Anlagenteile der Produktionsanlage, wobei die bestimmten jeweiligen Setzwerte innerhalb der angepassten jeweiligen Prozessfenster liegen und wobei das in der Produktionsanlage hergestellte Produkt die von den Eingangsqualitätsfenstern und Ausgangsqualitätsfenstern der mehreren Anlagenteile erforderlichen Qualitätseigenschaften erfüllt.

Gemäß dem Verfahren nach der Erfindung werden die aktuellen Zustände der Anlagenteile der Produktionsanlage erfasst. Dies erfolgt insbesondere mittels geeigneter Sensoren. Dadurch lassen sich die Zustände auf einfach Art und Weise und insbesondere kontinuierlich erfassen. Auf Basis der erfassten aktuellen Zustände der Anlagenteile werden die Prozessfenster der jeweiligen Anlagenteile an den aktuellen Zustand des Anlagenteils angepasst. Beispielsweise wird dabei berücksichtigt, dass sich das Prozessfenster über die Zeit wegen eines auftretenden Verschleißes reduziert. Auch können Störungen oder äußere Einflüsse erfasst werden und das Prozessfenster des betroffenen Anlagenteils kann entsprechend angepasst werden.

Das erfindungsgemäße Verfahren bestimmt Setzwerte für die Anlagenautomationen der Anlagenteile der Produktionsanlage, wobei die Setzwerte innerhalb der aktuellen Prozessfenster der Anlagenteile liegen. Es wird also der aktuellen Anlagenzustand bei der Bestimmung der Setzwerte berücksichtigt. Die Setzwerte sind so gewählt, dass das in der Produktionsanlage hergestellte Produkt die von den Eingangsqualitätsfenstern und Ausgangsqualitätsfenstern der mehreren Anlagenteile erforderlichen Qualitätseigenschaften erfüllt. Es wird also sichergestellt, dass das hergestellte Produkt über die gesamte Produktion die erforderlichen Qualitätsanforderungen erfüllt. Dadurch wird gleichzeitig gewährleistet, dass das finale Produkt die Qualitätsanforderungen erfüllt.

In einer erfindungsgemäßen Variante umfasst das Verfahren den Schritt des Aktualisierens der Setzwerte für die Anlagenautomationen der nachfolgenden Anlagenteile nach erfolgter Bearbeitung des herzustellenden Produkts durch einen Anlagenteil. Die Aktualisierung erfolgt auf Basis der erzielten Ausgangsqualität des abgearbeiteten Anlagenteils und der aktuellen Prozessfenster der nachfolgenden Anlagenteile. Es wird somit nach erfolgter Bearbeitung des herzustellenden Produkts durch ein Anlagenteil die nachfolgende Bearbeitung durch die nachfolgenden Anlagenteile aktualisiert. Die bereits erfolgte Bearbeitung durch die vorherigen Anlagenteile ist dabei unveränderlich und die Bearbeitung durch die nachfolgenden Anlagenteile wird auf Basis der aktuellen Prozessfenster der nachfolgenden Anlagenteile bestimmt.

Nach einer erfindungsgemäßen Variante umfasst der Verfahren den Schritt des Bestimmens einer Reihenfolge von in der Produktionsanlage herzustellenden Produkten, insbesondere unter Berücksichtigung der aktuellen Prozessfenster und der erzielbaren Qualitätseigenschaften der Ausgangsprodukte der Anlagenteile. Die Herstellung von Produkten in der Produktionsanlage wird auf Basis des aktuellen Zustands der Anlagenteile und der aktuellen Prozessfenster für mehrere herzustellende Produkte optimiert. Dabei werden beispielsweise Produkte mit vergleichbaren bzw. ähnlichen Qualitätsanforderungen nacheinander hergestellt, so dass die Setzwerte für die Anlagenautomationen der Anlagenteile möglichst minimal voneinander abweichen. Insbesondere umfasst das erfindungsgemäße Verfahren den Schritt des Berücksichtigens von Unterschieden und/oder Gemeinsamkeiten der herzustellenden Produkte bei der Bestimmung der Reihenfolge von in der Produktionsanlage herzustellenden Produkten.

Gemäß einer Variante der Erfindung umfasst das Verfahren den Schritt des Berücksichtigens von möglichen durch die jeweiligen Anlagenautomationen umsetzbaren Setzwertänderungsraten bei der Bestimmung der Setzwerte für die Anlagenautomationen der jeweiligen Anlagenteile. Die Anlagenautomationen der einzelnen Anlagenteile können die Setzwerte zwar innerhalb des aktuellen Prozessfensters umsetzen, jedoch ist dies häufig nur innerhalb bestimmter Zeiträume möglich. Es sind also keine Setzwertsprünge umsetzbar, sondern nur Änderungen innerhalb vorgegebener Setzwertänderungsrate. Diese Setzwertänderungsraten werden vom erfindungsgemäßen Verfahren bei der Bestimmung der Setzwerte für die Anlagenautomationen der jeweiligen Anlagenteile berücksichtigt.

Eine Variante des erfindungsgemäßen Verfahrens umfasst den Schritt des Überprüfens der erzielten Produktqualitäten im Rahmen einer Qualitätskontrolle nach einem oder mehreren der Anlagenteile, insbesondere zur Anpassung der Setzwerte für die Anlagenautomationen der nachfolgenden Anlagenteile. Es wird damit überprüft, ob an dem Standort der Qualitätskontrolle das bis dahin hergestellte Produkt die erwarteten Qualitätseigenschaften aufweist. Sollte die ermittelte Qualität von der erwarteten Qualität abweichen, können die Setzwerte für die Anlagenautomationen der nachfolgenden Anlagenteile angepasst werden, so dass das Produkt nachfolgend auch die Qualitätsanforderungen der Eingangsqualitätsfenster und Ausgangsqualitätsfenster der nachfolgenden Anlagenteile erfüllt.

Erfindungsgemäß bestimmen die Setzwerte der Anlagenautomation eines Anlagenteils die Ausgangsqualität des in dem Anlagenteil hergestellten Produkts, insbesondere ob und in welchem Bereich des Ausgangsqualitätsfensters die Qualität des in dem Anlagenteil hergestellten Produkts liegt. Über die Setzwerte wird also die Qualität des Ausgangsprodukts eines Anlagenteils bestimmt, wobei die Setzwerte innerhalb des aktuellen Prozessfensters des Anlagenteils liegen müssen.

In einer zweckmäßigen Variant der Erfindung werden der Verschleiß, der Wartungszustand oder dergleichen der Anlagenteile erfasst.

Nach einer besonders bevorzugten Variante der Erfindung umfasst das Verfahren den Schritt des Erstellens eines Vorhersagemodells für die zukünftigen Zustände der Anlagenteile, wobei die von dem Vorhersagemodell vorhergesagten Zustände der Anlagenteile und die daraus resultierenden Prozessfenster der Anlagenteile bei der Bestimmung der Setzwerte für die Anlagenautomationen der Anlagenteile berücksichtigt werden. Mittels des Vorhersagemodells wird insbesondere der zukünftige Zustand von Anlagenteilen zum Zeitpunkt der Bearbeitung eines bestimmten Produkts vorhergesagt. Das Vorhersagemodell gibt für jeden Anlagenteil die zum jeweiligen Bearbeitungszeitpunkt erwarteten Zustände des Anlagenteils an, auf deren Basis das zu dem Zeitpunkt erwartete Prozessfenster ermittelt wird. Durch das Vorhersagemodell verbessert sich die Genauigkeit der Steuerung der Produktionsanlage, insbesondere mit zunehmender Anzahl von Anlagenteilen. Besonders vorteilhaft ist das Vorhersagemodell bei der Bestimmung einer Produktionsreihenfolge für die Produktionsanlage, da mittels des Vorhersagemodells auch für zukünftig herzustellende Produkte die entsprechenden Zustände der Anlagenteile und die daraus resultierenden Prozessfenster bestimmt und bei der Planung der Produktionsreihenfolge berücksichtigt werden können.

Gemäß einer Variante der Erfindung basiert das Vorhersagemodell auf den mittels der Sensoren erfassten Zuständen der Anlagenteile, der erzielten Produktqualitäten der Anlagenteile, anderen der Produktionsanlage zugehörigen Messwerten oder dergleichen. Insbesondere kann dabei der zeitliche Verlauf der genannten Parameter überwacht werden und auf Basis der historischen Daten eine Vorhersage über zukünftige Zustände der Anlagenteile getroffen werden. Die Vorhersage kann auch durch Wartungsinformationen, Informationen zu in der Anlage herzustellenden Produkten oder anderen die Produktionsanlage betreffenden Parametern verfeinert werden.

In einer zweckmäßigen Variante der Erfindung basiert das Vorhersagemodell auf Methoden der statistischen Datenauswertung und/oder dem maschinellen Lernen, insbesondere der linearen oder quadratischen Programme, genetischer Optimierung, bestärkendes Lernen mit Q-Tabellen, neuronalen Netzen, Simulated Annealing, Metropolis, Schwarm-Algorithmen, Hill Climbing, Lagrange-Multiplikator-Methode oder dergleichen.

Nach einer vorteilhaften Variante der Erfindung wird das Vorhersagemodell kontinuierlich oder zyklisch trainiert, insbesondere auf Basis der mittels der Sensoren erfassten Zustände der Anlagenteile, der erzielten Produktqualitäten der Anlagenteile, anderen der Produktionsanlage zugehörigen Messwerte oder dergleichen. Das Vorhersagemodell wird somit immer weiter verbessert, so dass die Vorhersagegenauigkeit mit der Laufzeit der Produktionsanlage stetig zunimmt.

Gemäß einer bevorzugten Variante umfasst das erfindungsgemäße Verfahren den Schritt des Stoppens des Herstellungsprozesses in der Produktionsanlage, wenn die geforderte Qualität des hergestellten Produkts nicht erzielt werden kann, oder des Änderns des Herstellungsprozesses auf ein anderes herzustellendes Produkt, dessen geforderte Qualität noch durch den aktuellen Herstellungsprozess erzielt werden kann. Wird also festgestellt, dass das gewünschte Produkt aufgrund des aktuellen Anlagenzustands nicht herstellbar ist, wird entweder die Herstellung gestoppt oder auf ein anderes noch herstellbares Produkt geändert. Die kann auch während der Herstellungsprozesses, beispielsweise nach der Bearbeitung durch einen oder mehrere Anlagenteile erfolgen.

In einer zweckmäßigen Variante ist die Änderung auf ein anderes herzustellendes Produkt auf die innerhalb eines bestimmten Zeitraums vorgeplante Herstellung von herzustellenden Produkten beschränkt. Die aktuelle Produktion kann also nur auf ein Produkt geändert werden, welches innerhalb der näheren Zukunft herzustellen ist.

Nach einer Variante der Erfindung umfasst das Verfahren den Schritt des Berücksichtigens von mehreren gleichartigen Anlagenteilen, so dass die Bearbeitung eines Herstellungsschritts alternativ auf unterschiedlichen Anlagenteilen erfolgen kann. Kann also ein Anlagenteil die geforderte Produktqualität voraussichtlich nicht erzielen, wird der Herstellungsschritt auf einem anderen gleichartigen Anlagenteil ausgeführt, welcher die geforderte Produktqualität voraussichtlich bereitstellen kann.

Gemäß einer zweckmäßigen Variante der Erfindung umfasst das Verfahren das Speichern von Daten in einem zentralen Datenspeicher oder einem Cloudspeicher, vorzugsweise zur Speicherung und Bereitstellung von relevanten Daten, insbesondere der mittels Sensoren erfassten Zustände der Anlagenteile, der erzielten Produktqualitäten der jeweiligen Anlagenteile, der Setzwerte für die Anlagenautomationen der jeweiligen Anlagenteile und dergleichen.

In einer vorteilhaften Variante umfasst das erfindungsgemäße Verfahren den Schritt des Erfassens von geometrischen Informationen der in dem jeweiligen Anlagenteil hergestellten Produkte, insbesondere mittels optischer Sensoren in den jeweiligen Anlagenteilen. Bei metallurgischen Produktionsanlagen sind die geometrischen Informationen der in dem jeweiligen Anlagenteil hergestellten Produkte ein wesentlicher Faktor. Insbesondere kann das erfindungsgemäße Verfahren aus den geometrischen Informationen die Produktqualität des in dem Anlagenteil hergestellten Produkts und/oder den Anlagenzustand des Anlagenteils ableiten, vorzugsweise mittels statistischer Methoden und/oder maschinellem Lernen. Ferner lassen sich die geometrischen Informationen mittels der optischen Sensoren auf einfache Art und Weise kontinuierlich erfassen und nachfolgend auswerten, was die Genauigkeit des Systems verbessert.

Nach einer zweckmäßigen Variante umfasst das Verfahren das Anzeigen von für den Herstellungsprozess relevanten Informationen auf einer Benutzerschnittstelle, insbesondere auf einem tragbaren Gerät.

Erfindungsgemäß umfasst das Verfahren den Schritt des Erstellens eines Modells zur Bestimmung der Setzwerte für die Anlagenautomationen der mehreren Anlagenteile. Das Modell berücksichtigt dabei insbesondere die Eingangsqualitätsfenster, die Ausgangsqualitätsfenster und die aktuellen Prozessfenster der mehreren Anlagenteile. Ferner können zusätzlich noch weitere Parameter berücksichtigt werden, wie beispielsweise erfasste Messwerte aus den Anlagenteilen und/oder aus anderen Datenquellen wie einem Produktionsplanungsplanungssystem, Wartungsplanungssystem oder anderen Komponenten der Produktionsanlage. Auf Basis der Eingangsdaten kann das Modell die optimalen Setzwerte für die jeweiligen Anlagenteile zur Herstellung eines Produkts bestimmen.

Nach einer Variante der Erfindung beruht das Modell auf physikalischen Gesetzen. In einer alternativen Variante basiert das Modell auf Methoden der statistischen Datenauswertung und/oder dem maschinellen Lernen, insbesondere der linearen oder quadratischen Programme, genetischer Optimierung, bestärkendes Lernen mit Q-Tabellen, neuronalen Netzen, Simulated Annealing, Metropolis, Schwarm-Algorithmen, Hill Climbing, Lagrange-Multiplikator-Methode oder dergleichen.

Gemäß einer vorteilhaften Variante umfasst das erfindungsgemäße Verfahren den Schritt des kontinuierlichen oder zyklischen Trainierens des Modells zur Bestimmung der Setzwerte.

Die Aufgabe wird ferner gelöst durch ein Computerprogramm, umfassend Befehle, die bei der Ausführung des Programms durch einen Computer diesen veranlassen, das erfindungsgemäße Verfahren auszuführen, insbesondere dass das erfindungsgemäße System das erfindungsgemäße Verfahren ausführt.

Nachfolgend wird die Erfindung anhand von in den Figuren dargestellten Ausführungsbeispielen näher erläutert. Es zeigen:
- Fig. 1: eine schematische Ansicht eines ersten Ausführungsbeispiels eines erfindungsgemäßen Systems zur Steuerung einer aus mehreren Anlagenteilen bestehenden Produktionsanlage, und
- Fig. 2: eine schematische Ansicht eines zweiten Ausführungsbeispiels eines erfindungsgemäßen Systems zur Steuerung einer aus mehreren Anlagenteilen bestehenden Produktionsanlage.

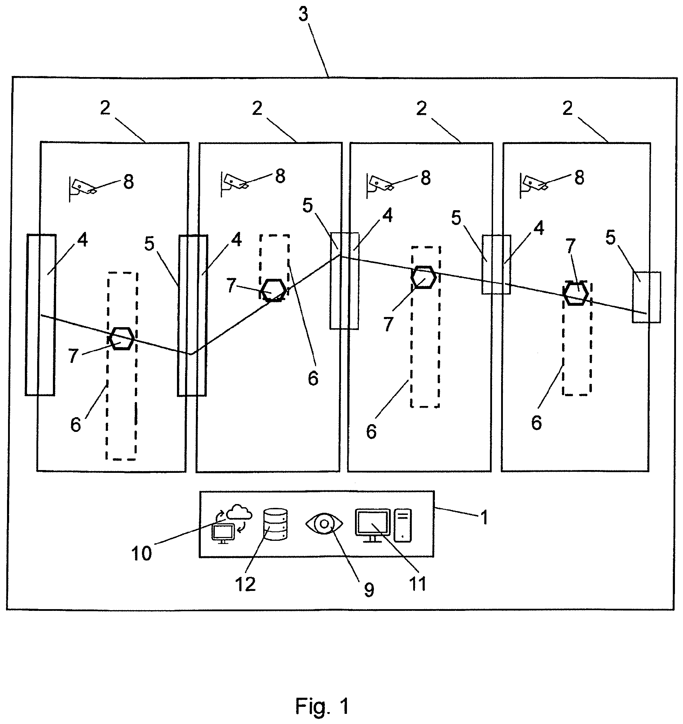

Fig. 1 zeigt eine schematische Ansicht eines ersten Ausführungsbeispiels eines erfindungsgemäßen System 1 zur Steuerung einer aus mehreren Anlagenteilen 2 bestehenden Produktionsanlage 3, insbesondere einer metallurgischen Produktionsanlage zur Erzeugung von Industriegütern wie metallischem Halbzeug und/oder metallischen Endprodukten. Das erfindungsgemäße System kann dabei innerhalb oder außerhalb der Produktionsanlage 3 angeordnet sein, wobei das System 1 zur Kommunikation mit der Produktionsanlage 3 ausgebildet ist.

Jeder Anlagenteil 2 der Produktionsanlage 3 weist ein Eingangsqualitätsfenster 4, ein Ausgangsqualitätsfenster 5 und ein Prozessfenster 6 auf. Das Eingangsqualitätsfenster 4 eines Anlagenteils 2 definiert die von dem Anlagenteil 2 erforderlichen Qualitätseigenschaften des Eingangsprodukts und das Ausgangsqualitätsfenster 5 eines Anlagenteils 2 definiert die von dem Anlagenteil 2 nach der Bearbeitung des Eingangsprodukts erlaubten Qualitätseigenschaften des Ausgangsprodukts. Bei einer aus mehreren Anlagenteilen 2 bestehenden Produktionsanlage 3 entspricht das Ausgangsqualitätsfenster 5 eines vorgelagerten Anlagenteils 2 dem Eingangsqualitätsfenster 4 des nachfolgenden Anlagenteils 2, was in Fig. 1 jeweils durch ein gemeinsames die beiden benachbarten Anlagenteile 2 überdeckenden Rechtecks dargestellt ist.

Das Prozessfenster 6 definiert die von dem jeweiligen Anlagenteil 2 umsetzbaren Setzwerte 7 für eine Anlagenautomation des Anlagenteils 2. Das Prozessfenster 6 ist in Fig. 1 jeweils durch ein gestricheltes Rechteck innerhalb der Anlagenteile 2 symbolisiert. Innerhalb des jeweiligen Prozessfensters 6 liegen die Setzwerte 7 für die Anlagenautomation des Anlagenteils 2. Die Setzwerte 7 sind in Fig. 1 durch Sechsecke symbolisiert. Die Setzwerte 7 der Anlagenautomation eines Anlagenteils 2 bestimmen die Ausgangsqualität des in dem Anlagenteil 2 hergestellten Produkts bestimmen, insbesondere ob und in welchem Bereich des Ausgangsqualitätsfensters 5 die Qualität des in dem Anlagenteil 2 hergestellten Produkts liegt. Dies ist in Fig. 1 jeweils durch die Linie von Eingangsqualitätsfenster 4 durch die Setzwerte 7 innerhalb des Prozessfensters 6 bis zum Ausgangsqualitätsfenster 5 symbolisiert. Über alle Anlagenteile 2 der Produktionsanlage 2 ergibt sich somit eine kontinuierliche Linie, welche den Herstellungsprozess innerhalb der Produktionsanlage symbolisiert.

Jeder Anlagenteil 2 erfasst seinen aktuellen Zustand mittels geeigneter Sensoren 8. Auf Basis der erfassten aktuellen Zustände der Anlagenteile 2 werden die Prozessfenster 2 der Anlagenteile 2 angepasst. Die Prozessfenster 6 können sich beispielsweise in einem bestimmten Parameterraum verschieben und/oder ihre Größe verändern. Dies ist in Fig. 1 durch die unterschiedlichen gestrichelten Rechtecke innerhalb der mehreren Anlagenteile 2 dargestellt.

Das erfindungsgemäße System 1 zur Steuerung der aus den mehreren Anlagenteilen 2 bestehenden Produktionsanlage 3 bestimmt für jeden Anlagenteil 2 Setzwerte 7 für die jeweilige Anlagenautomation. Die von dem erfindungsgemäßen System 1 bestimmten Setzwerte 7 liegen innerhalb der jeweiligen Prozessfenster 6 und sind so gewählt, dass das in der Produktionsanlage 3 hergestellte Produkt die von den Eingangsqualitätsfenstern 4 und Ausgangsqualitätsfenstern 5 der mehreren Anlagenteile 2 erforderlichen Qualitätseigenschaften erfüllt. Da das in der Produktionsanlage 3 hergestellte Produkt im Ausgangsqualitätsfenster 5 des letzten Anlagenteils 2 liegt, werden die an das hergestellte Produkt gestellten Qualitätsanforderungen erfüllt.

Vorzugsweise aktualisiert das erfindungsgemäße System 1 nach erfolgter Bearbeitung des herzustellenden Produkts durch einen Anlagenteil 2 die Setzwerte 7 für die Anlagenautomationen der nachfolgenden Anlagenteile 2 auf Basis der erzielten Ausgangsqualität des abgearbeiteten Anlagenteils 2 und der aktuellen Prozessfenster 6 der nachfolgenden Anlagenteile 2. Die Setzwerte 7 für die noch bevorstehenden Anlagenteile 2 werden also kontinuierlich angepasst, unter Berücksichtigung der bereits erfolgten Bearbeitung durch vorhergehende Anlagenteile 2.

In einer vorteilhaften Variante bestimmt das System 1 eine Reihenfolge von in der Produktionsanlage 3 herzustellenden Produkten, insbesondere unter Berücksichtigung der aktuellen Prozessfenster 6 und der erzielbaren Qualitätseigenschaften der Ausgangsprodukte der Anlagenteile 2. Das System 1 berücksichtigt bei der Bestimmung der Reihenfolge von in der Produktionsanlage 3 herzustellenden Produkte vorzugsweise die Unterschiede und/oder Gemeinsamkeiten der herzustellenden Produkte.

Bei der Bestimmung der Setzwerte 7 für die Anlagenautomationen der jeweiligen Anlagenteile 2 berücksichtigt das System 1 die möglichen durch die jeweiligen Anlagenautomationen umsetzbaren Setzwertänderungsraten.

Nach einer bevorzugten Variante umfasst das System 1 nach einem oder mehreren Anlagenteile 2 eine Qualitätskontrolle, zur Überprüfung der erzielten Produktqualitäten, insbesondere zur Anpassung der Setzwerte 7 für die Anlagenautomationen der nachfolgenden Anlagenteile 2. Es wird also zumindest teilweise nach den Anlagenteile 2 überprüft, ob das hergestellte Produkt innerhalb der Ausgangsqualitätsfenster 5 liegt. Je nach ermittelter Qualität, also Lage des hergestellten Produkts innerhalb des Ausgangsqualitätsfensters 5 werden die Setzwerte 7 für die Anlagenautomationen der nachfolgenden Anlagenteile 2 angepasst.

Die Sensoren 8 der Anlagenteile 2 erfassen beispielsweise den Verschleiß, den Wartungszustand oder dergleichen des Anlagenteils 2. Insbesondere umfassen die Anlagenteile 2 wenigstens teilweise optische Sensoren 8, zur Erfassung von geometrischen Informationen der in dem jeweiligen Anlagenteil 2 hergestellten Produkte. Aus den geometrischen Informationen kann das System 1 die Produktqualität des in dem Anlagenteil 2 hergestellten Produkts und/oder den Anlagenzustand des Anlagenteils 2 ableiten, vorzugsweise mittels statistischer Methoden und/oder maschinellem Lernen.

Gemäß einer besonders bevorzugten Variante der Erfindung erstellt das System 1 ein Vorhersagemodell 9 für die zukünftigen Zustände der Anlagenteile 2 und berücksichtigt die von dem Vorhersagemodell 9 vorhergesagten Zustände der Anlagenteile 2 und die daraus resultierenden Prozessfenster 6 der Anlagenteile 2 bei der Bestimmung der Setzwerte 7 für die Anlagenautomationen der Anlagenteile 2. Das Vorhersagemodell 9 basiert beispielsweise auf den mittels der Sensoren 8 erfassten Zuständen der Anlagenteile 2, der erzielten Produktqualitäten der Anlagenteile 2, anderen der Produktionsanlage 3 zugehörigen Messwerten oder dergleichen.

Das Vorhersagemodell 9 basiert auf Methoden der statistischen Datenauswertung und/oder dem maschinellen Lernen, insbesondere der linearen oder quadratischen Programme, genetischer Optimierung, bestärkendes Lernen mit Q-Tabellen, neuronalen Netzen, Simulated Annealing, Metropolis, Schwarm-Algorithmen, Hill Climbing, Lagrange-Multiplikator-Methode oder dergleichen.

Das Vorhersagemodell 9 wird beispielsweise kontinuierlich oder zyklisch trainiert, insbesondere auf Basis der mittels der Sensoren 8 erfassten Zustände der Anlagenteile 2, der erzielten Produktqualitäten der Anlagenteile 2, anderen der Produktionsanlage 3 zugehörigen Messwerte oder dergleichen.

Nach einer vorteilhaften Variante stoppt das System 1 den Herstellungsprozess in der Produktionsanlage 3, wenn die geforderte Qualität des hergestellten Produkts nicht erzielt werden kann. Falls möglich, kann das System 1 den Herstellungsprozess auf ein anderes herzustellendes Produkt ändern, dessen geforderte Qualität noch durch den aktuellen Herstellungsprozess erzielt werden kann. Zweckmäßigerweise ist die Änderung auf ein anderes herzustellendes Produkt auf die innerhalb eines bestimmten Zeitraums vorgeplante Herstellung von herzustellenden Produkten beschränkt.

Auch kann das System 1 mehrere gleichartige Anlagenteile 2 berücksichtigen, so dass die Bearbeitung eines Herstellungsschritts alternativ auf unterschiedlichen Anlagenteilen 2 erfolgen kann.

Das System 1 aus Fig. 1 umfasst ferner einen zentralen Datenspeicher 10 bzw. einen Cloudspeicher 10, zur Speicherung und Bereitstellung von systemrelevanten Daten, insbesondere der mittels Sensoren 8 erfassten Zustände der Anlagenteile 2, der erzielten Produktqualitäten der jeweiligen Anlagenteile 2, der Setzwerte 7 für die Anlagenautomationen der jeweiligen Anlagenteile 2 und dergleichen.

Zur Anzeige von für den Herstellungsprozess relevanten Informationen umfasst das System 1 eine Benutzerschnittstelle 11. Die Benutzerschnittstelle wird beispielsweise auf einem tragbaren Gerät bereitgestellt, so dass die Informationen auch innerhalb der Produktionsanlage, z.B. während einer Inspektion, zur Verfügung stehen.

Das erfindungsgemäße System 1 umfasst weiterhin ein Modell 12 zur Bestimmung der Setzwerte 7 für die Anlagenautomationen der mehreren Anlagenteile 2. Das Modell 12 basiert auf physikalischen Gesetzen oder auf Methoden der statistischen Datenauswertung und/oder dem maschinellen Lernen basiert, insbesondere der linearen oder quadratischen Programme, genetischer Optimierung, bestärkendes Lernen mit Q-Tabellen, neuronalen Netzen, Simulated Annealing, Metropolis, Schwarm-Algorithmen, Hill Climbing, Lagrange-Multiplikator-Methode oder dergleichen. Wie das Vorhersagemodell 9 kann auch das Modell 12 kontinuierlich oder zyklisch trainiert werden.

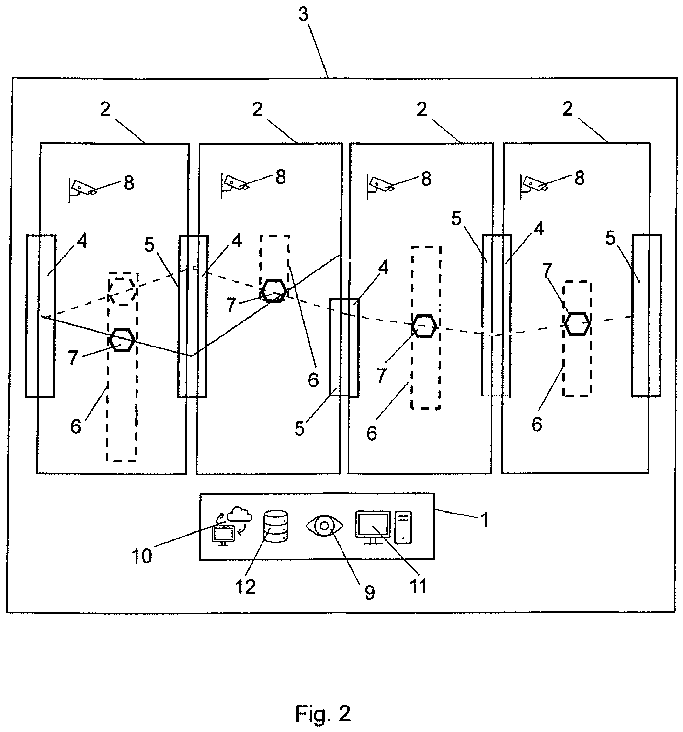

Fig. 2 zeigt eine schematische Ansicht eines zweiten Ausführungsbeispiels eines erfindungsgemäßen System 1 zur Steuerung einer aus mehreren Anlagenteilen 2 bestehenden Produktionsanlage 3, insbesondere einer metallurgischen Produktionsanlage zur Erzeugung von Industriegütern wie metallischem Halbzeug und/oder metallischen Endprodukten im Vergleich zu einer Steuerung nach dem Stand der Technik.

Die Erfindung unterscheidet sich vom Stand der Technik durch das Erfassen der aktuellen Zustände in den mehreren Anlagenteilen 2, insbesondere mittels Sensoren 8, dem Anpassen jeweiligen Prozessfenster 6 der mehreren Anlagenteile 2 anhand der erfassten aktuellen Zustände der mehreren Anlagenteile 2, und dem Bestimmen von jeweiligen Setzwerten 7 für die Anlagenautomationen der mehreren Anlagenteile 2 der Produktionsanlage 3, wobei die bestimmten jeweiligen Setzwerte 7 innerhalb der angepassten jeweiligen Prozessfenster 6 liegen und wobei das in der Produktionsanlage 3 hergestellte Produkt die von den Eingangsqualitätsfenstern 4 und Ausgangsqualitätsfenstern 5 der mehreren Anlagenteile 2 erforderlichen Qualitätseigenschaften erfüllt.

Nach dem Stand der Technik ist es möglich, dass ausgehend von der Bearbeitung durch einen vorhergehenden Anlagenteil 2 und dem aktuellen Prozessfenster 6 des aktuellen Anlagenteils 2 die Setzwerte 7 für die Anlagenautomation des aktuellen Anlagenteils nicht so gesetzt werden können, dass das hergestellte Produkte innerhalb des Ausgangsqualitätsfensters 5 des aktuellen Anlagenteils 2 liegt. Dies in Fig. 2 durch die durgezogene Linie symbolisiert, welche nach dem zweiten Anlagenteil von links außerhalb des Ausgangsqualitätsfensters 5 des Anlagenteils 2 liegt.

Gemäß der vorliegenden Erfindung werden die aktuellen Prozessfenster 6 sämtlicher Anlagenteile 2 bei der Bestimmung der Setzwerte 7 für die Anlagenautomationen der Anlagenteile 2 berücksichtigt. Es werden also schon bei den Anlagenteilen 2 am Anfang des Herstellungsprozesses die Prozessfenster der Anlagenteile 2 am Ende des Herstellungsprozesses berücksichtigt. Die Setzwerte 7 werden somit bestimmt, dass das in der Produktionsanlage 3 hergestellte Produkte innerhalb sämtlicher Eingangsqualitätsfenster 4 und Ausgangsqualitätsfenster 5 der Anlagenteile 2 liegt. Dies in Fig. 2 durch die gestrichelte Linie dargestellt, welche innerhalb sämtlicher Eingangsqualitätsfenster 4 und Ausgangsqualitätsfenster 5 liegt.

### Bezugszeichenliste

- 1: System
- 2: Anlagenteil
- 3: Produktionsanlage
- 4: Eingangsqualitätsfenster
- 5: Ausgangsqualitätsfenster
- 6: Prozessfenster
- 7: Setzwerte
- 8: Sensoren
- 9: Vorhersagemodell
- 10: Datenspeicher/Cloudspeicher
- 11: Benutzerschnittstelle
- 12: Modell zur Vorhersage von Setzwerten

## Patentansprüche

1. System (1) zur Steuerung einer aus mehreren Anlagenteilen (2) bestehenden Produktionsanlage (3), insbesondere einer metallurgischen Produktionsanlage zur Erzeugung von Industriegütern wie metallischem Halbzeug und/oder metallischen Endprodukten,
wobei jeder Anlagenteil (2) ein Eingangsqualitätsfenster (4), ein Ausgangsqualitätsfenster (5) und ein Prozessfenster (6) aufweist, wobei Setzwerte (7) die Ausgangsqualität des in dem Anlagenteil hergestellten Produkts bestimmen,
wobei das Eingangsqualitätsfenster (4) eines Anlagenteils (2) die von dem Anlagenteil (2) erforderlichen Qualitätseigenschaften des Eingangsprodukts definiert und das Ausgangsqualitätsfenster (5) eines Anlagenteils (2) die von dem Anlagenteil (2) nach der Bearbeitung des Eingangsprodukts erlaubten Qualitätseigenschaften des Ausgangsprodukts definiert,
wobei bei einer aus mehreren Anlagenteilen (2) bestehenden Produktionsanlage (3) das Ausgangsqualitätsfenster (5) eines vorgelagerten Anlagenteils (2) dem Eingangsqualitätsfenster (4) des nachfolgenden Anlagenteils (2) entspricht,
wobei das Prozessfenster (6) die von dem jeweiligen Anlagenteil (2) umsetzbaren Setzwerte (7) für eine Anlagenautomation des Anlagenteils (2) definiert, und
wobei jeder Anlagenteil (2) den aktuellen Zustand mittels Sensoren (8) erfasst und das Prozessfenster (6) des Anlagenteils (2) an den erfassten aktuellen Zustand anpasst,
wobei das System (1) zur Steuerung der aus den mehreren Anlagenteilen (2) bestehenden Produktionsanlage (3) für jeden Anlagenteil (2) Setzwerte (7) für die jeweilige Anlagenautomation bestimmt, die innerhalb der jeweiligen Prozessfenster (6) liegen, so dass das in der Produktionsanlage (3) hergestellte Produkt die von den Eingangsqualitätsfenstern (4) und Ausgangsqualitätsfenstern (5) der mehreren Anlagenteile (2) erforderlichen Qualitätseigenschaften erfüllt,
wobei die Setzwerte (7) für die Anlagenautomationen der mehreren Anlagenteile (2) mittels eines Modells (12) bestimmt werden.

2. System (1) nach Anspruch 1,
wobei das System (1) nach erfolgter Bearbeitung des herzustellenden Produkts durch einen Anlagenteil (2) die Setzwerte (7) für die Anlagenautomationen der nachfolgenden Anlagenteile (2) auf Basis der erzielten Ausgangsqualität des abgearbeiteten Anlagenteils (2) und der aktuellen Prozessfenster (6) der nachfolgenden Anlagenteile (2) aktualisiert.

3. System (1) nach Anspruch 1 oder Anspruch 2,
wobei das System (1) eine Reihenfolge von in der Produktionsanlage (3) herzustellenden Produkten bestimmt, insbesondere unter Berücksichtigung der aktuellen Prozessfenster (6) und der erzielbaren Qualitätseigenschaften der Ausgangsprodukte der Anlagenteile (2).

4. System (1) nach einem der Ansprüche 1 bis 3,
wobei das System (1) bei der Bestimmung der Setzwerte (7) für die Anlagenautomationen der jeweiligen Anlagenteile (2) die möglichen durch die jeweiligen Anlagenautomationen umsetzbaren Setzwertänderungsraten berücksichtigt.

5. System (1) nach einem der Ansprüche 1 bis 4,
wobei das System (1) ein Vorhersagemodell (9) für die zukünftigen Zustände der Anlagenteile (2) erstellt und die von dem Vorhersagemodell (9) vorhergesagten Zustände der Anlagenteile (2) und die daraus resultierenden Prozessfenster (6) der Anlagenteile (2) bei der Bestimmung der Setzwerte (7) für die Anlagenautomationen der Anlagenteile (2) berücksichtigt.

6. System (1) nach Anspruch 5,
wobei das Vorhersagemodell (9) auf den mittels der Sensoren (8) erfassten Zuständen der Anlagenteile (2), der erzielten Produktqualitäten der Anlagenteile (2), anderen der Produktionsanlage (3) zugehörigen Messwerten oder dergleichen basiert.

7. System (1) nach einem der Ansprüche 1 bis 6,
wobei das System (1) mehrere gleichartige Anlagenteile (2) berücksichtigt, so dass die Bearbeitung eines Herstellungsschritts alternativ auf unterschiedlichen Anlagenteilen (2) erfolgen kann.

8. System (1) nach einem der Ansprüche 1 bis 7,
wobei die Anlagenteile (2) wenigstens teilweise optische Sensoren (8) umfassen, zur Erfassung von geometrischen Informationen der in dem jeweiligen Anlagenteil (2) hergestellten Produkte.

9. Verfahren zur Steuerung einer aus mehreren Anlagenteilen (2) bestehenden Produktionsanlage (3), insbesondere einer metallurgischen Produktionsanlage zur Erzeugung von Industriegütern wie metallischem Halbzeug und/oder metallischen Endprodukten,
wobei jeder Anlagenteil (2) ein Eingangsqualitätsfenster (4), ein Ausgangsqualitätsfenster (5) und ein Prozessfenster (5) aufweist,
wobei das Eingangsqualitätsfenster (4) eines Anlagenteils (2) die von dem Anlagenteil (2) erforderlichen Qualitätseigenschaften des Eingangsprodukts definiert und das Ausgangsqualitätsfenster (5) eines Anlagenteils (2) die von dem Anlagenteil (2) nach der Bearbeitung des Eingangsprodukts erlaubten Qualitätseigenschaften des Ausgangsprodukts definiert,
wobei bei einer aus mehreren Anlagenteilen (2) bestehenden Produktionsanlage (3) das Ausgangsqualitätsfenster (5) eines vorgelagerten Anlagenteils (2) dem Eingangsqualitätsfenster (4) des nachfolgenden Anlagenteils (2) entspricht,
wobei das Prozessfenster (6) die von dem jeweiligen Anlagenteil (2) umsetzbaren Setzwerte (6) für eine Anlagenautomation des Anlagenteils (2) definiert,
wobei das Verfahren die folgenden Schritte umfasst:
Erfassen der aktuellen Zustände in den mehreren Anlagenteilen (2) der Produktionsanlage (3) und Anpassen der jeweiligen Prozessfenster (6) der mehreren Anlagenteile (2) anhand der erfassten aktuellen Zustände der mehreren Anlagenteile (2) auf Basis der Überwachung,
Erstellen eines Modells (12) zur Bestimmung von Setzwerten (7) für die Anlagenautomationen der mehreren Anlagenteile (2), wobei die Setzwerte (7) die Ausgangsqualität des in dem Anlagenteil hergestellten Produkts bestimmen, und
Bestimmen der jeweiligen Setzwerten (7) für die Anlagenautomationen der mehreren Anlagenteile (2) der Produktionsanlage (3), wobei die bestimmten jeweiligen Setzwerte (7) innerhalb der angepassten jeweiligen Prozessfenster (6) liegen, so dass das in der Produktionsanlage (3) hergestellte Produkt die von den Eingangsqualitätsfenstern (4) und Ausgangsqualitätsfenstern (5) der mehreren Anlagenteile (2) erforderlichen Qualitätseigenschaften erfüllt.

10. Verfahren nach Anspruch 9,
weiterhin umfassend den Schritt des Aktualisierens der Setzwerte (7) für die Anlagenautomationen der nachfolgenden Anlagenteile (2) nach erfolgter Bearbeitung des herzustellenden Produkts durch einen Anlagenteil (2), wobei die Aktualisierung auf Basis der erzielten Ausgangsqualität des abgearbeiteten Anlagenteils (2) und der aktuellen Prozessfenster (6) der nachfolgenden Anlagenteile (2) erfolgt.

11. Verfahren nach Anspruch 9 oder Anspruch 10,
weiterhin umfassend den Schritt des Bestimmens einer Reihenfolge von in der Produktionsanlage (3) herzustellenden Produkten, insbesondere unter Berücksichtigung der aktuellen Prozessfenster (6) und der erzielbaren Qualitätseigenschaften der Ausgangsprodukte der Anlagenteile (2).

12. Verfahren nach einem der Ansprüche 9 bis 11,
umfassend den Schritt des Berücksichtigens von möglichen durch die jeweiligen Anlagenautomationen umsetzbaren Setzwertänderungsraten bei der Bestimmung der Setzwerte (7) für die Anlagenautomationen der jeweiligen Anlagenteile (2).

13. Verfahren nach einem der Ansprüche 9 bis 12,
umfassend den Schritt des Erstellens eines Vorhersagemodells (9) für die zukünftigen Zustände der Anlagenteile (2), wobei die von dem Vorhersagemodell (9) vorhergesagten Zustände der Anlagenteile (2) und die daraus resultierenden Prozessfenster (6) der Anlagenteile (2) bei der Bestimmung der Setzwerte (7) für die Anlagenautomationen der Anlagenteile (2) berücksichtigt werden.

14. Verfahren nach Anspruch 13,
wobei das Vorhersagemodell (9) auf den mittels der Sensoren (8) erfassten Zuständen der Anlagenteile (2), der erzielten Produktqualitäten der Anlagenteile (2), anderen der Produktionsanlage zugehörigen Messwerten oder dergleichen basiert.

15. Verfahren nach einem der Ansprüche 9 bis 14,
umfassend den Schritt des Berücksichtigens von mehreren gleichartigen Anlagenteilen (2), so dass die Bearbeitung eines Herstellungsschritts alternativ auf unterschiedlichen Anlagenteilen (2) erfolgen kann.

16. Verfahren nach einem der Ansprüche 9 bis 15,
umfassend den Schritt des Erfassens von geometrischen Informationen der in dem jeweiligen Anlagenteil (2) hergestellten Produkte, insbesondere mittels optischer Sensoren (8) in den jeweiligen Anlagenteile (2).

17. Computerprogramm, umfassend Befehle, die bei der Ausführung des Programms durch einen Computer diesen veranlassen, das Verfahren nach einem der Ansprüche 9 bis 16 auszuführen, insbesondere dass das System (1) nach einem der Ansprüche 1 bis 8 das Verfahren nach einem der Ansprüche 9 bis 16 ausführt.

## Claims

1. System (1) for controlling a production plant (3) consisting of a plurality of plant parts (2), particularly a metallurgical production plant for producing industrial goods such as metallic semi-finished products and/or metallic end products,
wherein each plant part (2) has an input quality window (4), an output quality window (5) and a process window (6), wherein setting values (7) determine the output quality of the product produced in the plant,
wherein the input quality window (4) of a plant part (2) defines the quality characteristics, which are required by the plant part (2), of the input product and the output quality window (5) of a plant part (2) defines the quality characteristics, which that are permitted by the plant part (2) after processing the input product, of the output product,
wherein in the case of a production plant (3) consisting of a plurality of plant parts (2) the output quality window (5) of an upstream plant part (2) corresponds with the input quality window (4) of the downstream plant part (2),
wherein the process window (6) defines the setting values (7) which can be implemented by the respective plant part (2) for a plant automation unit of the plant part (2),
wherein each plant part (2) detects the current state by means of sensors (8) and adapts the process window (6) of the plant part (2) to the detected current state, and
wherein the system (1) for controlling the production plant (3) consisting of the plurality of plant parts (2) determines for each plant part (2) setting values (7), which lie within the respective process windows (6), for the respective plant automation unit so that the product produced in the production plant (3) meets the quality characteristics required by the input quality windows (4) and output quality windows (5) of the plurality of plant parts (2),
wherein the setting values (7) for the plant automation units of the plurality of plant parts (2) are determined by means of a model (12).

2. System (1) according to claim 1, wherein after the product to be produced has been processed by a plant part (2) the system (1) updates the setting values (7) for the plant automation units of the subsequent plant parts (2) on the basis of the achieved output quality of the processed plant part (2) and the current process windows (6) of the subsequent plant parts (2).

3. System (1) according to claim 1 or claim 2, wherein the system (1) determines a sequence of products to be produced in the production plant (3), particularly by taking into account the current process windows (6) and the achievable quality characteristics of the output products of the plant parts (2).

4. System (1) according to any one of the claims 1 to 3, wherein the system (1) takes into account the possible setting value change rates, which can be realised by the respective plant automation units, when determining the setting values (7) for the plant automation units of the respective plant parts (2).

5. System (1) according to any one of the claims 1 to 4, wherein the system (1) creates a prediction model (9) for the future states of the plant parts (2) and takes into account the states of the plant parts (2) predicted by the prediction model (9) and the process windows (6), which result therefrom, of the plant parts (2) when determining the setting values (7) for the plant automation units of the plant parts (2).

6. System (1) according to claim 5, wherein the prediction model (9) is based on the states of the plant parts (2) detected by means of the sensors (8), the achieved product qualities of the plant parts (2), other measured values belonging to the production plant (3) or the like.

7. System (1) according to any one of the claims 1 to 6, wherein the system (1) takes into account a plurality of plant parts (2) of the same type so that the processing of a production step can alternatively take place on different plant parts (2).

8. System (1) according to any one of the claims 1 to 7, wherein the plant parts (2) comprise at least in part optical sensors (8) for detecting geometric data of the products produced in the respective plant part (2).

9. Method for controlling a production plant (3) consisting of a plurality of plant parts (2), particularly a metallurgical production plant for producing industrial goods such as metallic semi-finished products and/or metallic end products,
wherein each plant part (2) has an input quality window (4), an output quality window (5) and a process window (5),
wherein the input quality window (4) of a plant part (2) defines the quality characteristics, which are required by the plant part (2), of the input product and the output quality window (5) of a plant part (2) defines the quality characteristics, which are permitted by the plant part (2) after processing the input product, of the output product,
wherein in the case of a production plant (3) consisting of a plurality of plant parts (2) the output quality window (5) of an upstream plant part (2) corresponds with the input quality window (4) of the downstream plant part (2),
wherein the process window (6) defines the setting values (6), which can be implemented by the respective plant part (2), for a plant automation unit of the plant part (2),
wherein the method comprises the following steps:
detecting the current states in the plurality of plant parts (2) and adapting the respective process windows (6) of the plurality of plant parts (2) by way of the detected current states of the plurality of plant parts (2) on the basis of the monitoring,
creating a model (12) for determining setting values (7) for the plant automation units of the plurality of plant parts (2), wherein the setting values (7) determine the output quality of the product produced in the plant part, and
determining the respective setting values (7) for the plant automation units of the plurality of plant parts (2) of the production plant (3), wherein the determined respective setting values (7) lie within the adapted respective process windows (6) so that the product produced in the production plant (3) meets the quality characteristics required by the input quality windows (4) and output quality windows (5) of the plurality of plant parts (2).

10. Method according to claim 9, further comprising the step of updating the setting values (7) for the plant automation units of the downstream plant parts (2) after the product to be produced has been processed by a plant part (2), wherein the updating is carried out on the basis of the achieved output quality of the processed plant part (2) and the current process windows (6) of the downstream plant parts (2).

11. Method according to claim 9 or claim 10, further comprising the step of determining a sequence of products to be produced in the production plant (3), particularly taking into account the current process windows (6) and the achievable quality characteristics of the output products of the plant parts (2).

12. Method according to any one of the claims 9 to 11, comprising the step of taking into account possible setting value change rates, which can be realised by the respective plant automation units, when determining the setting values (7) for the plant automation units of the respective plant parts (2).

13. Method according to any one of the claims 9 to 12, comprising the step of creating a prediction model (9) for the future states of the plant parts (2), wherein the states of the plant parts (2) predicted by the prediction model (9) and the process windows (6), which result therefrom, of the plant parts (2) are taken in account when determining the setting values (7) for the plant automation units of the plant parts (2).

14. Method according to claim 13, wherein the prediction model (9) is based on the states of the plant parts (2) detected by means of the sensors (8), the achieved product qualities of the plant parts (2), other measured values belonging to the production plant or the like.

15. Method according to any one of the claims 9 to 14, comprising the step of taking into account a plurality of plant parts (2) of the same type so that the processing of a production step can alternatively take place on different plant parts (2).

16. Method according to any one of the claims 9 to 15, comprising the step of detecting geometric information of the products produced in the respective plant part (2), particularly by means of optical sensors (8) in the respective plant parts (2).

17. Computer program comprising commands which when the program is executed by a computer cause this to execute the method according to any one of claims 9 to 16, particularly in that the system (1) according to any one of claims 1 to 8 executes the method according to any one of the claims 9 to 16.

## Revendications

1. Système (1) de commande d'une installation de production (3) constituée de plusieurs parties d'installation (2), en particulier d'une installation de production métallurgique pour la fabrication de biens industriels tels que des produits métalliques semi-finis et/ou des produits métalliques finis,
dans lequel chaque partie d'installation (2) présente une fenêtre de qualité d'entrée (4), une fenêtre de qualité de sortie (5) et une fenêtre de processus (6), dans lequel des valeurs de consigne (7) déterminent la qualité de sortie du produit fabriqué dans la partie d'installation,
dans lequel la fenêtre de qualité d'entrée (4) d'une partie d'installation (2) définit les propriétés de qualité du produit d'entrée requises par la partie d'installation (2) et la fenêtre de qualité de sortie (5) d'une partie d'installation (2) définit les propriétés de qualité du produit de sortie autorisées par la partie d'installation (2) après le traitement du produit d'entrée,
dans lequel, dans le cas d'une installation de production (3) constituée de plusieurs parties d'installation (2), la fenêtre de qualité de sortie (5) d'une partie d'installation (2) amont correspond à la fenêtre de qualité d'entrée (4) de la partie d'installation (2) suivante,
dans lequel la fenêtre de processus (6) définit les valeurs de consigne (7) pouvant être mises en œuvre par la partie d'installation (2) respective pour un automatisme d'installation de la partie d'installation (2), et
dans lequel chaque partie d'installation (2) détecte l'état actuel au moyen de capteurs (8) et adapte la fenêtre de processus (6) de la partie d'installation (2) à l'état actuel détecté,
dans lequel le système (1) de commande de l'installation de production (3) constituée des plusieurs parties d'installation (2) détermine, pour chaque partie d'installation (2), des valeurs de consigne (7) pour l'automatisme d'installation respectif, lesquelles se situent à l'intérieur des fenêtres de processus (6) respectives, de sorte que le produit fabriqué dans l'installation de production (3) satisfait aux propriétés de qualité requises par les fenêtres de qualité d'entrée (4) et les fenêtres de qualité de sortie (5) des plusieurs parties d'installation (2),
dans lequel les valeurs de consigne (7) pour les automatismes d'installation des plusieurs parties d'installation (2) sont déterminées au moyen d'un modèle (12).

2. Système (1) selon la revendication 1,
dans lequel le système (1), après le traitement effectué du produit à fabriquer par une partie d'installation (2), met à jour les valeurs de consigne (7) pour les automatismes d'installation des parties d'installation (2) suivantes sur la base de la qualité de sortie obtenue de la partie d'installation (2) traitée et des fenêtres de processus (6) actuelles des parties d'installation (2) suivantes.

3. Système (1) selon la revendication 1 ou la revendication 2,
dans lequel le système (1) détermine un ordre de produits à fabriquer dans l'installation de production (3), en particulier en tenant compte des fenêtres de processus (6) actuelles et des propriétés de qualité pouvant être obtenues des produits de sortie des parties d'installation (2).

4. Système (1) selon l'une des revendications 1 à 3,
dans lequel le système (1), lors de la détermination des valeurs de consigne (7) pour les automatismes d'installation des parties d'installation (2) respectives, tient compte des taux de variation de valeurs de consigne possibles pouvant être mis en œuvre par les automatismes d'installation respectifs.

5. Système (1) selon l'une des revendications 1 à 4,
dans lequel le système (1) établit un modèle de prédiction (9) pour les états futurs des parties d'installation (2) et tient compte des états des parties d'installation (2) prédits par le modèle de prédiction (9) et des fenêtres de processus (6) des parties d'installation (2) qui en résultent lors de la détermination des valeurs de consigne (7) pour les automatismes d'installation des parties d'installation (2).

6. Système (1) selon la revendication 5,
dans lequel le modèle de prédiction (9) est basé sur les états des parties d'installation (2) détectés au moyen des capteurs (8), sur les qualités de produit obtenues des parties d'installation (2), sur d'autres valeurs de mesure associées à l'installation de production (3) ou similaires.

7. Système (1) selon l'une des revendications 1 à 6,
dans lequel le système (1) tient compte de plusieurs parties d'installation (2) de même type, de sorte que le traitement d'une étape de fabrication peut être effectué de manière alternative sur différentes parties d'installation (2).

8. Système (1) selon l'une des revendications 1 à 7,
dans lequel les parties d'installation (2) comprennent au moins partiellement des capteurs optiques (8), pour la détection d'informations géométriques des produits fabriqués dans la partie d'installation (2) respective.

9. Procédé de commande d'une installation de production (3) constituée de plusieurs parties d'installation (2), en particulier d'une installation de production métallurgique pour la fabrication de biens industriels tels que des produits métalliques semi-finis et/ou des produits métalliques finis,
dans lequel chaque partie d'installation (2) présente une fenêtre de qualité d'entrée (4), une fenêtre de qualité de sortie (5) et une fenêtre de processus (6),
dans lequel la fenêtre de qualité d'entrée (4) d'une partie d'installation (2) définit les propriétés de qualité du produit d'entrée requises par la partie d'installation (2) et la fenêtre de qualité de sortie (5) d'une partie d'installation (2) définit les propriétés de qualité du produit de sortie autorisées par la partie d'installation (2) après le traitement du produit d'entrée,
dans lequel, dans le cas d'une installation de production (3) constituée de plusieurs parties d'installation (2), la fenêtre de qualité de sortie (5) d'une partie d'installation (2) amont correspond à la fenêtre de qualité d'entrée (4) de la partie d'installation (2) suivante,
dans lequel la fenêtre de processus (6) définit les valeurs de consigne (7) pouvant être mises en œuvre par la partie d'installation (2) respective pour un automatisme d'installation de la partie d'installation (2),
dans lequel le procédé comprend les étapes suivantes :
détection des états actuels dans les plusieurs parties d'installation (2) de l'installation de production (3) et adaptation des fenêtres de processus (6) respectives des plusieurs parties d'installation (2) à l'aide des états actuels détectés des plusieurs parties d'installation (2) sur la base de la surveillance,
création d'un modèle (12) pour la détermination de valeurs de consigne (7) pour les automatismes d'installation des plusieurs parties d'installation (2), les valeurs de consigne (7) déterminant la qualité de sortie du produit fabriqué dans la partie d'installation, et
détermination des valeurs de consigne (7) respectives pour les automatismes d'installation des plusieurs parties d'installation (2) de l'installation de production (3), les valeurs de consigne (7) respectives déterminées se situant à l'intérieur des fenêtres de processus (6) respectives adaptées, de sorte que le produit fabriqué dans l'installation de production (3) satisfait aux propriétés de qualité requises par les fenêtres de qualité d'entrée (4) et les fenêtres de qualité de sortie (5) des plusieurs parties d'installation (2).

10. Procédé selon la revendication 9,
comprenant en outre l'étape de mise à jour des valeurs de consigne (7) pour les automatismes d'installation des parties d'installation (2) suivantes après le traitement effectué du produit à fabriquer par une partie d'installation (2), la mise à jour étant effectuée sur la base de la qualité de sortie obtenue de la partie d'installation (2) traitée et des fenêtres de processus (6) actuelles des parties d'installation (2) suivantes.

11. Procédé selon la revendication 9 ou la revendication 10,
comprenant en outre l'étape de détermination d'un ordre de produits à fabriquer dans l'installation de production (3), en particulier en tenant compte des fenêtres de processus (6) actuelles et des propriétés de qualité pouvant être obtenues des produits de sortie des parties d'installation (2).

12. Procédé selon l'une des revendications 9 à 11,
comprenant l'étape de prise en compte de taux de variation de valeurs de consigne possibles pouvant être mis en œuvre par les automatismes d'installation respectifs lors de la détermination des valeurs de consigne (7) pour les automatismes d'installation des parties d'installation (2) respectives.

13. Procédé selon l'une des revendications 9 à 12,
comprenant l'étape de création d'un modèle de prédiction (9) pour les états futurs des parties d'installation (2), les états des parties d'installation (2) prédits par le modèle de prédiction (9) et les fenêtres de processus (6) des parties d'installation (2) qui en résultent étant pris en compte lors de la détermination des valeurs de consigne (7) pour les automatismes d'installation des parties d'installation (2).

14. Procédé selon la revendication 13,
dans lequel le modèle de prédiction (9) est basé sur les états des parties d'installation (2) détectés au moyen des capteurs (8), sur les qualités de produit obtenues des parties d'installation (2), sur d'autres valeurs de mesure associées à l'installation de production ou similaires.

15. Procédé selon l'une des revendications 9 à 14,
comprenant l'étape de prise en compte de plusieurs parties d'installation (2) de même type, de sorte que le traitement d'une étape de fabrication peut être effectué de manière alternative sur différentes parties d'installation (2).

16. Procédé selon l'une des revendications 9 à 15,
comprenant l'étape de détection d'informations géométriques des produits fabriqués dans la partie d'installation (2) respective, en particulier au moyen de capteurs optiques (8) dans les parties d'installation (2) respectives.

17. Programme informatique, comprenant des instructions qui, lors de l'exécution du programme par un ordinateur, amènent celui-ci à exécuter le procédé selon l'une des revendications 9 à 16, en particulier que le système (1) selon l'une des revendications 1 à 8 exécute le procédé selon l'une des revendications 9 à 16.
